# EUROPÄISCHE PATENTANMELDUNG

(11) **EP 0 921 420 A1**
(43) Veröffentlichungstag der Anmeldung: **09.06.1999**
(21) Anmeldenummer: 97440126.7
(22) Anmeldetag: 08.12.1997
(51) Int. Cl.: G02B 6/16, G02B 6/12

(54) **Planarer optischer Wellenleiter, Planarer optischer Wellenleiter mit Bragg-Gitter und Herstellungsverfahren hierfür**

(71) Anmelder: ALCATEL, 75008 Paris (FR)
(72) Erfinder: Lösch, Kurt, Dr., 70191 Stuttgart (DE)
(74) Vertreter: Schätzle, Albin, Dipl.-Phys.

(57) **Zusammenfassung**

Bekannt ist, einen photosensitiven Wellenleiter-Kern einem optischen Interferenzmuster auszusetzen, welches unter Verwendung einer Phasenmaske erzeugt wird. Die genaue Positionierung der Phasenmaske über dem optischen Wellenleiter ist jedoch schwierig, wenn mehrere Bragg-Gitter auf engem Raum erzeugt werden sollen. Die Erfindung löst die Aufgabe, praktisch beliebig definierte Brechzahl-Gitter hochpräzise in einem Wellenleiter-Kern eines optischen Wellenleiters ohne die Verwendung von Phasenmasken herzustellen. Dazu wird eine Pufferschicht des optischen Wellenleiters, vorzugsweise dessen Deckschicht (CLA), so strukturiert, daß ein auf den Wellenleiter gerichteter UV-Laser im Wellenleiter-Kern (COR) ein optisches Interferenzmuster erzeugt und dadurch ein Bragg-Gitter einprägt. Die Strukturierung (GST) wird vorzugsweise durch Ätzen erzeugt.

## Beschreibung

Die Erfindung betrifft planare optische Wellenleiter. Insbesondere betrifft die Erfindung planare optische Wellenleiter mit einem Wellenleiter-Kern, dessen Brechzahl sich in Ausbreitungsrichtung des im Wellenleiter-Kern geführten Lichts periodisch ändert. Derartige periodische Änderungen der Brechzahl bezeichnet man als Brechzahl-Gitter oder auch als Bragg-Gitter. Gegenstand der Erfindung ist außerdem ein Herstellungsverfahren für planare optische Wellenleiter mit Bragg-Gitter.

In planaren optischen Wellenleitern werden Bragg-Gitter beispielsweise verwendet, um aus farbigem Licht einen Anteil mit einer definierten Wellenlänge herauszufiltern. Diese Wellenlänge wird als Bragg-Wellenlänge bezeichnet und ist festgelegt durch die Periode des Bragg-Gitters. In auf dem Frequenz-Multiplex-Verfahren beruhenden optischen Übertragungssystemen können derartige Wellenlängen-Filter als integriert optische Multiplexer oder Demultiplexer eingesetzt werden.

Es gibt verschiedene Möglichkeiten, Bragg-Gitter in planaren optischen Wellenleitern zu erzeugen. Eine Möglichkeit besteht darin, den Wellenleiter-Kern des optischen Wellenleiters mit periodisch angeordneten Ausnehmungen zu versehen, wie dies z. B. in der Patentschrift EP-B1-0 546 705 beschrieben ist. Aus der EP-A1-0 701 150 ist außerdem bekannt, auf die vertikalen Flanken dieser Ausnehmungen eine Schicht mit hoher Brechzahl aufzubringen.

Eine anderer Ansatz nutzt die Photosensitivität des Wellenleiter-Kerns aus. Ein Material heißt photosensitiv, wenn sich die Brechzahl durch Bestrahlung mit Licht erhöhen läßt. Die Photosensitivität ist in der Regel am größten bei Bestrahlung mit kurzwelligem Licht hoher Intensität, wie es beispielsweise UV-Laser erzeugen. Die Wellenleiter-Kernschichten der meisten bekannten optischen Wellenleiterstrukturen sind photosensitiv; die Photosensitivität kann jedoch auch gezielt durch geeignete Maßnahmen, wie unten näher erläutert, erhöht werden.

Um im photosensitiven Wellenleiter-Kern eines optischen Wellenleiters ein Bragg-Gitter mit Hilfe von UV-Licht einzuprägen, erzeugt man im Wellenleiter-Kern ein optisches Interferenzmuster. Die Erzeugung des optischen Interferenzmusters kann beispielsweise durch Einkoppeln von Laser-Licht in den Wellenleiter-Kern erfolgen. Wenn am der Einkoppelstelle gegenüberliegenden Ende des Wellenleiters die Lichtwelle reflektiert wird, so bildet sich im Wellenleiter eine stehende Welle aus, in der Intensitätsmaxima und -minima in regelmäßigen Abständen aufeinander folgen. Ein derartiges Verfahren, allerdings für optische Fasern, wird in der Patentschrift US 4 474 427 beschrieben.

Ein anderes Verfahren zur Erzeugung eines optischen Interferenzmusters besteht darin, eine Phasenmaske mit kollimierten UV-Licht zu durchleuchten. Auf der Rückseite der Phasenmaske entsteht dann ein Interferenzmuster, dem die Wellenleiterstruktur ausgesetzt wird. An den Stellen, an denen es im Interferenzmuster zu konstruktiver Überlagerung des Lichtwellen kommt, ist die Lichtintensität so hoch, daß sich die Brechzahl im Wellenleiter-Kern dauerhaft verändert.

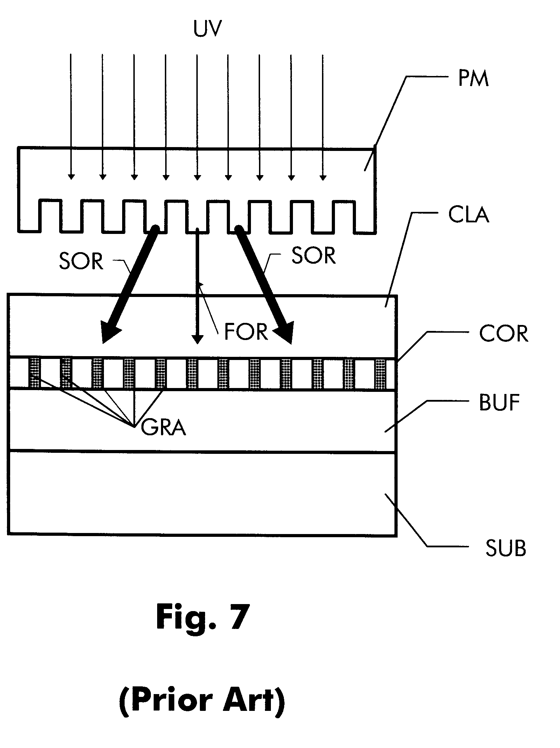

Ein derartiges Herstellungsverfahren mit Hilfe von Phasenmasken wird in der DE-A1-43 37 103 beschrieben. Fig. 7 zeigt eine auf einem Substrat SUB aufgebrachte Wellenleiterstruktur, bestehend aus einer unteren Pufferschicht BUF, einem Wellenleiter-Kern COR und einer oberen Pufferschicht (=Deckschicht) CLA. Direkt über der Wellenleiterstruktur ist eine Phasenmaske PM angeordnet. Die Phasenmaske PM besteht aus einem Quarzkörper, in dessen Oberfläche eine Reliefstruktur eingearbeitet ist. Die Gestalt der Reliefstruktur entspricht ungefähr der einer periodischen Rechteckwelle mit einer Periode von etwa 1000 nm. Diese Phasenmaske PM wird mit UV-Licht aus einem Excimer-Laser bestrahlt. Unterhalb der Phasenmaske PM, d. h. innerhalb der Wellenleiterstruktur, entsteht ein Interferenzmuster. Wenn die einzelnen Parameter des Verfahrens (u. a. Periode und Amplitude der Oberflächen-Reliefstruktur, Wellenlänge des Lasers) geeignet gewählt sind, lassen sich die in Fig. 7 als FOR angedeuteten gebeugten Strahlen 0. Ordnung weitgehend unterdrücken, so daß fast ausschließlich die divergenten Strahlen der 1. Ordnung SOR auf den Wellenleiter-Kern COR des optischen Wellenleiters treffen und dort ein Bragg-Gitter GRA einprägen.

Mit Hilfe des dort beschriebenen Verfahrens lassen sich auf relativ einfache Weise sehr präzise Bragg-Gitter in optischen Wellenleitern herstellen.

Nachteilig ist jedoch, daß mit einer derartigen Phasenmaske immer nur ein Bragg-Gitter mit einer bestimmten Bragg-Wellenlänge hergestellt werden kann. Für bestimmte Anwendungen ist es jedoch erforderlich, mehrere Bragg-Gitter mit unterschiedlichen Bragg-Wellenlängen auf engem Raum einzuprägen. Ein Beispiel für eine derartige Anwendung ist ein kaskadierter Add&Drop-Multiplexer, auf den in einem Anwendungsbeispiel weiter unten näher eingegangen wird. Wenn bei dem soeben beschriebenen Verfahren mehrere Bragg-Gitter mit unterschiedlichen Bragg-Wellenlängen auf engem Raum eingeprägt werden sollen, so muß für jedes Bragg-Gitter eine andere Phasenmaske verwendet werden. Überdies ist es in diesem Falle sehr schwierig, die einzelnen Phasenmasken exakt gegenüber dem Wellenleiter-Kern des optischen Wellenleiters zu positionieren.

Abhilfe schafft hier ein Verfahren, welches aus der EP-A2-736 783 bekannt ist. Dort wird zunächst auf der Deckschicht eines planaren optischen Wellenleiters mit bekannten photolithographischen Methoden eine Maske aufgebracht. Anschließend wird der planare optische Wellenleiter durch die Maske hindurch mit Licht geeigneter Wellenlänge bestrahlt. Die Wirkung ist die gleiche wie bei der Verwendung einer Phasenmaske, d. h. im photosensitiven Kern des optischen Wellenleiters wird durch Bildung eines Interferenzmusters ein Bragg-Gitter eingeprägt. Diese Lösung zeichnet sich folglich dadurch aus, daß die Phasenmaske funktionell in den optischen Wellenleiter integriert ist und somit nicht positioniert zu werden braucht. Nachteilig ist jedoch, daß die auf den optischen Wellenleiter aufgebrachte Maske nicht alterungsbeständig ist. Daher muß der Wellenleiter unmittelbar nach Herstellung der Maske mit Licht bestrahlt werden. Die Möglichkeit, erst viel später über die Wellenlänge des zur Bestrahlung verwendetet Lichts die Bragg-Wellenlänge des erzeugten Gitters zu bestimmen, besteht nicht. Außerdem wird ein erheblicher Teil des eingestrahlten Lichts von der Maske reflektiert oder absorbiert. Entsprechend gering ist die Effizient, mit der das Bragg-Gitter eingeprägt wird, und entsprechend klein sind somit auch die erzeugbaren Brechzahldifferenzen. Eine beliebige Erhöhung der Lichtleistung ist nicht möglich, da dadurch die Maske beschädigt werden könnte.

Es ist daher Aufgabe der Erfindung, ein Herstellungsverfahren anzugeben, mit dessen Hilfe man Bragg-Gitter in planaren optischen Wellenleitern erzeugen kann und welches nicht die angesprochenen Nachteile der bekannten Lösungen aufweist. Das Verfahren soll es ermöglichen, mehrere Bragg-Gitter mit unterschiedlicher Bragg-Wellenlänge in beliebiger Anordnung, insbesondere auf sehr begrenztem Raum, auf einfache Weise zu erzeugen. Schwierige aktive Justierungs-Schritte sollen nicht notwendig sein. Ferner wird ein planarer optischer Wellenleiter angegeben, der ein Zwischenerzeugnis des erfindungsgemäßen Herstellungsverfahrens ist.

Die vorliegende Erfindung löst diese Aufgabe mit Hilfe der in Anspruch 5 aufgeführten Merkmale. Zunächst wird als Zwischenerzeugnis ein planarer optischer Wellenleiter hergestellt, der die in einem der Ansprüche 1 bis 5 aufgeführten Merkmale aufweist. Erfindungsgemäß ist bei diesem planaren optischen Wellenleiter die Deckschicht so strukturiert, daß bei Bestrahlung mit (kurzwelligem) Licht direkt ein Bragg-Gitter in den Wellenleiterkern eingeprägt wird. Eine separate Phasenmaske wird nicht benötigt; außerdem ist die Strukturierung in der Deckschicht alterungsbeständig und reflektiert oder absorbiert bei Bestrahlung nur sehr wenig Licht, so daß eine hohe Effizienz beim Einprägen des Bragg-Gitters erzielt wird.

Anstelle der Deckschicht kann auch eine andere Pufferschicht strukturiert sein. Eine Strukturierung der unteren Pufferschicht ist beispielsweise dann vorteilhaft, wenn bei der Herstellung des Bragg-Gitters die Bestrahlung mit Licht nicht von der Oberseite des optischen Wellenleiters her erfolgt, sondern von unten durch das Substrat hindurch. Die Oberfläche des Wellenleiters bleibt in diesem Falle frei von Ausnehmungen oder zusätzlichen Schichten.

Die strukturierte Pufferschicht zur Erzeugung des Interferenzmusters wird vorzugsweise lithographisch definiert. Als Lithographietechniken können beispielsweise Photolithographie, Elektronenstrahllithographie oder lonenstrahllithographie eingesetzt werden. Dadurch ist eine sehr hohe Präzision der Strukturierung gewährleistet. Außerdem besteht ein großer Gestaltungsfreiraum bei der Festlegung der Strukturierung. Somit können auch die Bragg-Gitter im Wellenleiter-Kern nach beinahe beliebigen Vorgaben konfiguriert und entsprechend präzise eingeprägt werden.

Die Erfindung und deren vorteilhafte Ausgestaltungen werden nachfolgend anhand der Zeichnungen ausführlich beschrieben. Die Zeichnungen sind nicht maßstäblich. Einander entsprechende Elemente in den Zeichnungen sind durch gleiche Bezugszeichen gekennzeichnet. Es zeigen:
- Fig. 1:: Längsschnitt durch einen erfindungsgemäßen planaren optischen Wellenleiter nach einem der Ansprüche 1 bis 3,
- Fig. 2:: Perspektivische Darstellung eines erfindungsgemäßen planaren optischen Wellenleiters nach Anspruch 3,
- Fig. 3:: Draufsicht auf einen erfindungsgemäßen planaren optischen Wellenleiter nach Anspruch 3,
- Fig. 4:: Draufsicht auf einen erfindungsgemäßen optischen Wellenleiter, dessen Ausnehmungen auf der Deckschicht gekrümmt sind,
- Fig. 5:: Draufsicht auf einen erfindungsgemäßen optischen Wellenleiter, dessen Ausnehmungen auf der Deckschicht gekrümmt sind und bei dem der Abstand zwischen den einzelnen Ausnehmungen nicht konstant ist.
- Fig. 6:: Schematische Darstellung eines kaskadierten Vielfach-Add&Drop-Multiplexers, in dem die Erfindung realisiert ist,
- Fig. 7:: Längsschnitt durch eine Anordnung nach dem Stand der Technik, mit deren Hilfe ein Bragg-Gitter in einen planaren optischen Wellenleiter eingeprägt werden kann.

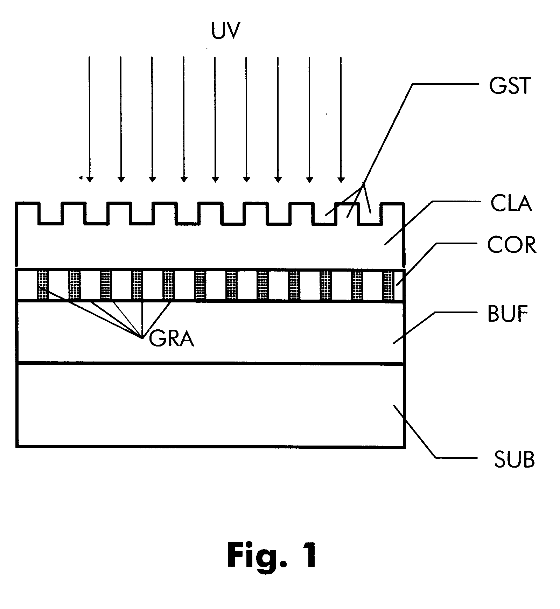

In Fig. 1 ist ein erfindungsgemäßer planarer optischer Wellenleiter in einem Längsschnitt dargestellt. Der erfindungsgemäße optische Wellenleiter hat einen Wellenleiter-Kern COR und wenigstens zwei Pufferschichten BUF und CLA. Wenn, wie in Fig. 1 dargestellt, lediglich zwei Pufferschichten vorhanden sind, so ist eine der Pufferschichten (CLA) zugleich die den optischen Wellenleiter nach oben hin abschließende Deckschicht. Die Pufferschichten BUF und CLA haben die Eigenschaft, daß ihre Brechzahl kleiner ist als derjenige des Wellenleiter-Kerns COR. Dadurch wird in den Wellenleiter-Kern eingekoppeltes Licht im Wellenleiter geführt. Der Wellenleiter-Kern COR kann z. B. als vergrabener Streifenwellenleiter oder als Filmwellenleiter ausgeführt sein. Der optische Wellenleiter ist auf einem als Träger dienenden Substrat aufgebracht. Als Material für das Substrat kann z. B. ein Halbleiter wie Silizium oder Indium-Phosphid , eine Glasplatte oder auch eine Keramik verwendet werden.

Derartige planare optische Wellenleiter lassen sich aus unterschiedlichen Werkstoffen herstellen. Üblich sind z. B. Polymere oder Silikate, die nach an anderer Stelle detailliert beschriebenen Verfahren als dünne Schichten auf ein Substrat aufgebracht werden, vgl. z. B. M. Kawachi et al., 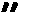 Fabrication of SiO₂-TiO₂ Glass Planar Optical Waveguides by Flame Hydrolysis Deposition", Electronic Letters, Vol. 19, No. 15 (1983), Seiten 583-584, oder auch J. J. G. Allen et a., 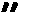 Silica-based integrated opic components for telecommunications applications", Optical Engineering, Vol. 32, No. 5 (1993), Seiten 1011-1014.

Der Wellenleiter-Kern besteht aus einem photosensitiven Material. Wie oben bereits erwähnt, sind die meisten gängigen Materialen, die für Wellenleiter-Kerne verwendet werden, photosensitiv. Eine Möglichkeit, die Photosensitivität in mit Germanium dotierten Wellenleiter-Kernen aus Silikaten zu erhöhen, besteht z. B. darin, den Wellenleiter-Kern molekularem Wasserstoff auszusetzen. Wenn der Wellenleiter-Kern mit einem UV-Laser bestrahlt wird, so reagieren die Germanium-Atome im Wellenleiter-Kern mit dem in den Wellenleiter-Kern eindiffundierten Wasserstoff-Atomen. An diesen Stellen erhöht sich die Massen-Dichte des Wellenleiter-Kerns, womit eine Erhöhung der Brechzahl einhergeht.

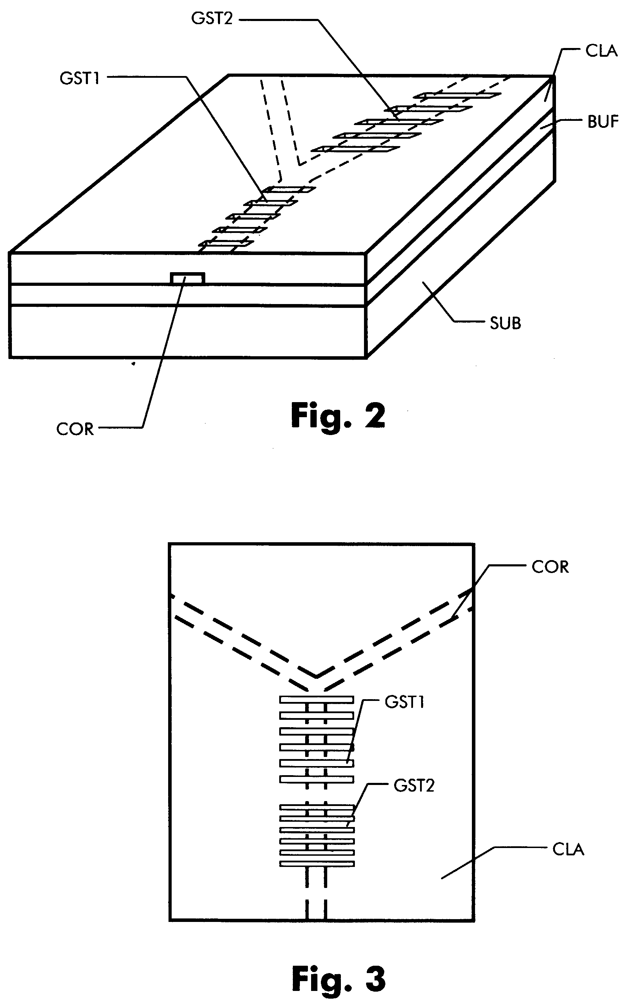

Bei dem in Fig. 1 gezeigten Ausführungsbeispiel ist die Deckschicht CLA an ihrer Oberfläche strukturiert. Diese Strukturierung GST hat hier die Form von quer zur Richtung des optischen Wellenleiters angeordneten streifenförmigen Ausnehmungen, wie sie auch in den unten näher besprochenen Fig. 2 und 3 - nicht maßstäblich - dargestellt sind (GST1 und GST2). Ein kohärenter Lichtstrahl, welcher von oben auf diese Strukturierung GST fällt, wird an den Ausnehmungen gebeugt, wodurch unterhalb der Strukturierung, d. h. auch im Wellenleiter-Kern, ein optisches Interferenzmuster entsteht.

Zur Herstellung der Oberflächen-Strukturierung können verschiedene Verfahren verwendet werden. Die Auswahl des Verfahrens richtet sich u. a. nach den Materialien, aus denen der optische Wellenleiter aufgebaut ist. So kann beispielsweise bei einem Silikat-Wellenleiter, der mittels Flamm-Hydrolyse-Abscheidung (FHD) auf ein Substrat aufgebracht worden ist, die Strukturierung mittels Elektronenstrahl-Lithographie und nachfolgendem Trockenätzen erfolgen.

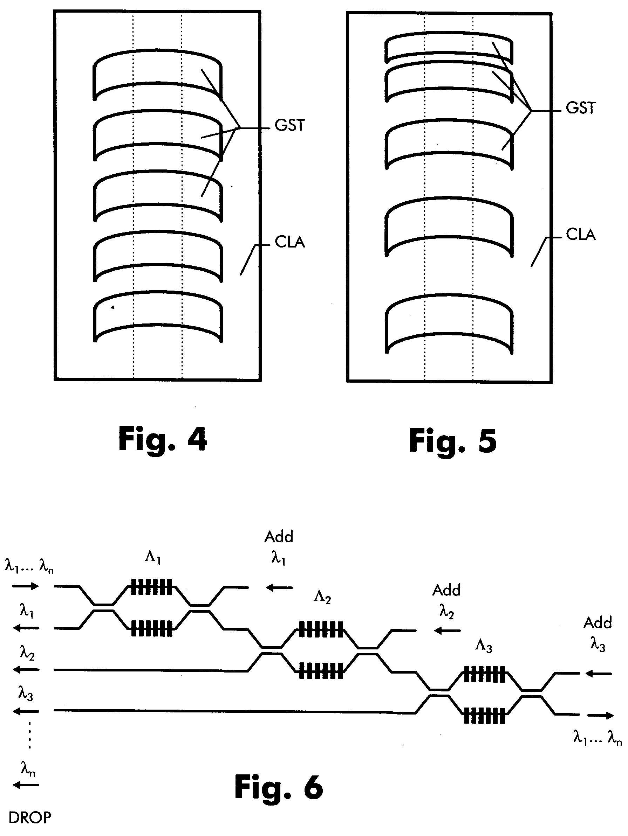

Das oben beschriebene Ausführungsbeispiel läßt sich in vielfältiger Weise abwandeln und ergänzen. So muß, wie oben bereits erwähnt, nicht unbedingt die Deckschicht strukturiert sein. Gegebenenfalls ist es günstiger, die strukturierte Pufferschicht mit weiteren Schichten zu überdecken. Ebenso kann sich die strukturierte Pufferschicht auf der Substratseite befinden. In Fig. 1 bedeutete dies, daß nicht die Deckschicht, sondern die Pufferschicht BUF mit regelmäßig angeordneten, mit einem geeigneten Material ausgefüllten Ausnehmungen versehen ist. Die Beleuchtung mit Laser-Licht könnte dann entweder von unten durch das Substrat SUB hindurch oder aber, wenn die Substratoberfläche oder eine darauf befindliche Reflex-Schicht das Laserlicht reflektiert, von oben erfolgen.Durch geeignete Festlegung der Strukturierung ist es möglich, praktisch beliebig definierte Brechzahl-Gitter dem Wellenleiter-Kern einzuprägen. In Fig. 1 und und 2 ist die Strukturierung rechteckförmig. Denkbar sind beispielsweise auch sinusförmige Strukturierungen. Im Prinzip können die Strukturierungen, wie bei dem in Fig. 5 in Aufsicht dargestellten erfindungsgemäßen optischen Wellenleiter, nicht-periodisch sein. In der Deckschicht CLA sind Ausnehmungen GST angeordnet. Der Abstand der einzelnen Ausnehmungen voneinander nimmt hier gleichmäßig zu.

Außerdem müssen die Strukturierungen nicht senkrecht zur Ausbreitungsrichtung des Lichts im Wellenleiter ausgerichtet sein. Ferner ist es gegebenenfalls günstiger, die Strukturierungen nicht als rechteckige, sondern leicht gekrümmte Streifen aufzuführen. Die in Fig. 4 und Fig. 5 in Aufsicht dargestellten optischen Wellenleiter haben derartig gekrümmte Ausnehmungen GST in der Deckschicht CLA.

Der erste Schritt im erfindungsgemäßen Herstellungverfahren für einen planaren optischen Wellenleiter mit Bragg-Gitter besteht darin, einen planaren optischen Wellenleiter nach einem der Ansprüche 1 bis 3 herzustellen. Dies ist in den obigen Abschnitten eingehend erläutert worden. In einem zweiten Schritt wird der planare optische Wellenleiter mit einem kohärentem Lichtstrahl beleuchtet. Wenn die strukturierte Pufferschicht die Deckschicht ist, erfolgt das Beleuchten des Wellenleiters von oben; ist eine substratseitige Pufferschicht strukturiert, so ist eine Beleuchtung von der Substratseite möglicherweise zweckmäßig.

Das Interferenzmuster ist umso schärfer ausgebildet, je monochromatischer das eingestrahlte Licht ist. Wenn, wie dies in der Regel verlangt wird, das eingeprägte Bragg-Gitter sehr regelmäßig angeordnet sein soll, so ist darauf zu achten, daß der Lichtstrahl kollimiert ist. Bei der Verwendung eines Lasers als Lichtquelle sind diese Anforderungen automatisch erfüllt. Wie oben erläutert, reagieren photosensitive Materialien besonders stark auf intensives UV-Licht. Daher wird vorzugsweise zum Einprägen des Bragg-Gitters in den Wellenleiter-Kern COR ein UV-Laser, z. B. ein Excimer-Laser, als Lichtquelle verwendet. Es versteht sich, daß die Deckschicht CLA und der Wellenleiter-Kern COR aus einem Material bestehen müssen, welches für dieses eingestrahlte Licht transparent ist, damit das Licht bis in den Wellenleiter-Kern vordringen kann.

Fig. 6 zeigt ein vorteilhaftes Anwendungsbeispiel für die Erfindung, bei dem mehrere Bragg-Gitter unterschiedlicher Bragg-Wellenlänge auf engem Raum angeordnet sind. Dargestellt ist ein Vielfach-Add&Drop-Multiplexer, dessen Grundprinzip z. B. in einem Aufsatz von G. E. Kohnke et al. mit dem Titel 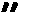 Planar waveguide Mach-Zender bandpass filter fabricated with single exposure UV-induced gratings'', OFC '96 Technical Digest, Seite 277, erläutert ist. Diese an sich bekannte Anordnung besteht aus mehreren kaskadierten Mach-Zehnder-Interferometern, die aus optischen Wellenleitern aufgebaut sind. In die Arme der Mach-Zehnder-Interferometer sind Bragg-Gitter eingeprägt. Jedes Interferometer hat eine andere Bragg-Wellenlänge Λ₁, Λ₂ und Λ₃. Diese Bragg-Gitter wirken für Licht mit dieser Wellenlänge wie Spiegel. Auf diese Weise können aus einem Signallicht mit Wellenlängen λ₁...λₙ einzelne Wellenlängen λ_{1,}λ_{2,}λ₃ dem Licht entnommen und auf der anderen Seite der Anordnung dem Signallicht wieder hinzuaddiert werden.

## Patentansprüche

1. Planarer optischer Wellenleiter mit einem Wellenleiter-Kern (COR), dessen Brechzahl sich lokal durch Bestrahlung mit Licht geeigneter Wellenlänge und Intensität verändern läßt, und mit wenigstens zwei Pufferschichten (BUF, CLA),
**dadurch gekennzeichnet, daß**
eine der Pufferschichten (BUF, CLA) so strukturiert ist, daß ein Lichtstrahl, welcher durch diese strukturierte Pufferschicht (CLA) hindurch auf den Wellenleiter-Kern (COR) trifft, wenigstens in einem räumlich begrenzten Bereich des Wellenleiter-Kerns ein optisches Interferenzmuster erzeugt und dadurch in diesem räumlich begrenzten Bereich des Wellenleiter-Kerns dauerhaft ein Brechzahl-Gitter (GRA) einprägt.

2. Planarer optischer Wellenleiter nach Anspruch 1, dadurch gekennzeichnet, daß die Dicke der strukturierten Pufferschicht (CLA) sich in dem Bereich des optischen Wellenleiters, in dem im Wellenleiter-Kern (COR) ein Brechzahl-Gitter eingeprägt werden soll, periodisch ändert.

3. Planarer optischer Wellenleiter nach Anspruch 2, dadurch gekennzeichnet, daß die periodische Änderung der strukturierten Pufferschicht (CLA) rechteckförmig ist.

4. Planarer optischer Wellenleiter nach einem der vorhergehenden Ansprüche, dadurch gekennzeichnet, daß ein räumlich begrenzter Bereich des Wellenleiter-Kerns ein Brechzahl-Gitter hat.

5. Verfahren zur Herstellung eines planaren optischen Wellenleiters mit einem Brechzahl-Gitter, welches folgende Schritte umfaßt:
- Herstellen eines planaren optischen Wellenleiters, der die in einem der Ansprüche 1 bis 3 aufgeführten Merkmale hat,
- Beleuchten des planaren optischen Wellenleiters mit einem Lichtstrahl, der wenigstens in einem räumlich begrenzten Bereich des Wellenleiter-Kerns ein optisches Interferenzmuster erzeugt und dadurch in diesem räumlich begrenzten Bereich des Wellenleiter-Kerns dauerhaft ein Brechzahl-Gitter einprägt.
